Europäisches Patentamt

European Patent Office

Office européen des brevets

(19)

(11) Veröffentlichungsnummer: **0 008 750**

**A1**

(12) **EUROPÄISCHE PATENTANMELDUNG**

(21) Anmeldenummer: **79103114.9**

(22) Anmeldetag: **23.08.79**

(51) Int. Cl.³: **G 02 F 1/17**

(30) Priorität: **04.09.78 DE 2838556**

(43) Veröffentlichungstag der Anmeldung:
**19.03.80 Patentblatt 80/6**

(84) Benannte Vertragsstaaten:
**AT BE CH DE FR GB IT LU NL SE**

(71) Anmelder: **SIEMENS AKTIENGESELLSCHAFT Berlin und München**
**Postfach 261**
**D-8000 München 22(DE)**

(72) Erfinder: **Freller, Helmut**
**Steinbergstrasse 34a**
**D-8505 Röthenbach(DE)**

(72) Erfinder: **Lilge, Joachim**
**Zum Klösterle 35**
**D-8500 Nürnberg(DE)**

(72) Erfinder: **Schack, Peter**
**Schnieglinger Strasse 33**
**D-8500 Nürnberg(DE)**

(54) **Elektrochrome Anzeigevorrichtung.**

(57) Die Erfindung bezieht sich auf eine elektrochrome Anzeigevorrichtung mit einer verbesserten Stabilität und Dichtigkeit der Zellen bei wechselnden Betriebstemperaturen, insbesondere im Bereich von 248°K bis 353°K. Die elektrochrome Anzeigevorrichtung gemäß der Erfindung hat eine nichttransparente Rückelektrode (1) aus vorgeformten Blechen, z.B. aus Titan, Nickel oder Edelstahl, im Dickenbereich von 0,3 bis 0,5 mm. Die Bleche weisen an der Innenseite eine Wolframtrioxid-Schicht (2) auf und bilden gleichzeitig die Rückwand der Zelle.

EP 0 008 750 A1

SIEMENS AKTIENGESELLSCHAFT Unser Zeichen

Berlin und München VPA 78 P 7 5 3 8 EUR

## Elektrochrome Anzeigevorrichtung

Die Erfindung bezieht sich auf eine elektrochrome Anzeigevorrichtung bestehend aus einer schichtförmig aufgebauten Zelle mit zwei sich im Abstand gegenüberstehenden elektrisch steuerbaren Elektroden, wobei die eine Elektrode transparent und die andere Elektrode nichttransparent ist und zwischen den Elektroden elektrochrome Schichten und eine elektrolytisch leitende Flüssigkeitsschicht angeordnet sind.

Die bisher bekannten flachen, elektrochromen Anzeigezellen werden durch Verkleben zweier Glasplatten aufgebaut, wobei ein Abstandsrahmen den für die Aufnahme des Elektrolyten und des Kontrastmittels nötigen Zellenhohlraum schafft. In der Regel trägt die Frontplatte der Zelle auf der Innenseite die für die Anzeige erforderlichen Schichtstrukturen, die aus transparenter Kontaktschicht und elektrochromer Wolframtrioxidschicht bestehen. Die Rückwand hat auf der Innenseite den glei-

Wb 2 Dm / 28.8.1978

chen Schichtaufbau jedoch vollflächig. Während in transmassiv arbeitenden Anzeigen dieser Aufbau für die Funktion erforderlich ist, tritt bei reflektiv arbeitenden Zellen die Rückelektrode nicht in Erscheinung, da sie durch das in der Zelle befindliche Kontrastmittel abgedeckt wird.

Für die überwiegende Anzahl der Anwendungsfälle ist eine transparente Rückelektrode nicht erforderlich. Aus diesem Grund sind bereits Rückelektroden aus Glasplatten mit Kohle-, Metall- und Metall/Wolframtrioxid-Mischschichten bekannt (Electrocomponent Science and Technology, 1977, Vol.3, 247-251).

Der Erfindung liegt die Aufgabe zugrunde, einen verbesserten Aufbau für reflektive, elektrochrome Anzeigezellen der genannten Art zu schaffen. Insbesondere soll eine verbesserte Stabilität und Dichtigkeit der Zellen bei wechselnden Betriebstemperaturen im Bereich von $248°$ K bis $353°$ K erreicht werden. Darüber hinaus sollen auch fertigungstechnische Vorteile bei der Herstellung solcher Zellen gegenüber den bisher bekannten erzielt werden.

Erfindungsgemäß wird die Aufgabe dadurch gelöst, daß die nichttransparente Elektrode aus einem vorgeformten Metallblech mit einer Dicke von 0,3 bis 0,5 mm mit einer Wolframtrioxid-Schicht an der Innenseite besteht und die Rückwand der Zelle bildet.

Es ist vorteilhaft, die nichttransparente Elektrode aus Titan, Nickel oder Edelstahl herzustellen.

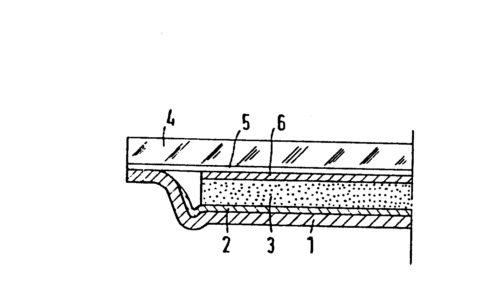

Anhand der Zeichnung und eines Ausführungsbeispiels wird die Erfindung näher erläutert.

0008750

Die nichttransparente Rückelektrode 1 besteht aus vorgeformten Blechen, z.B. aus Titan, Nickel oder Edelstahl. Die Bleche weisen an der Innenseite eine Wolframtrioxid-Schicht 2 auf, die vorzugsweise durch Aufdampfen von Wolframtrioxid, aber auch durch Aufdampfen von Wolfram und anschließender thermischer oder anodischer Oxidation in Wolframtrioxid hergestellt werden kann. Durch die Schalenform der Rückelektrode 1 kann auf einen Abstandsrahmen verzichtet werden, da der Zellhohlraum 3 für die Aufnahme des Elektrolyten und des Kontrastmittels bereits vorliegt. Die Frontglasplatte 4 mit der Anzeigeschichtstruktur 5 und 6 wird lediglich als Deckel der Schale aufgeklebt. Durch die verhältnismäßig dünnen Metallbleche (0,3 bis 0,5 mm) wird besonders bei größeren Zellen eine gewisse Elastizität der Zellrückwand erzielt, die durch das Einpressen von Dehnungssicken noch erhöht werden kann. Damit kann die Ausdehnung des flüssigen oder pastösen Elektrolyten, die bei dem bisher üblichen starren Glasaufbau bei Temperaturerhöhung stets zur Undichtigkeit der Zellen führte, durch Verformung der Rückwand aufgefangen werden.

Überraschenderweise zeigte die metallische Rückelektrode gemäß der Erfindung im Betrieb bessere Entfärbungseigenschaften, was auf den vergleichsweise niedrigen Widerstand zurückzuführen ist.


2 Patentansprüche
1 Figur

0008750

- 1 -    VPA 78 P 7 5 3 8 EUR.

<u>Patentansprüche</u>

1. Elektrochrome Anzeigevorrichtung bestehend aus einer schichtförmig aufgebauten Zelle mit zwei sich im Abstand gegenüberstehenden elektrisch steuerbaren Elektroden, wobei die eine Elektrode transparent und die andere Elektrode nichttransparent ist und zwischen den Elektroden elektrochrome Schichten und eine elektrolytisch leitende Flüssigkeitsschicht angeordnet sind, d a - d u r c h  g e k e n n z e i c h n e t , daß die nicht-transparente Elektrode (1) aus einem vorgeformten Metallblech mit einer Dicke von 0,3 bis 0,5 mm mit einer Wolframtrioxid-Schicht (2) an der Innenseite besteht und die Rückwand der Zelle bildet.

2. Elektrochrome Anzeigevorrichtung nach Anspruch 1, d a d u r c h  g e k e n n z e i c h n e t , daß die nichttransparente Elektrode (1) aus Titan, Nickel oder Edelstahl besteht.

Europäisches
Patentamt

# EUROPÄISCHER RECHERCHENBERICHT

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | US – A – 3 844 636 (D.L. MARICLE et al.) <br> * Spalte 8, Zeilen 12 bis 17 * <br> -- | 1,2 | G 02 F 1/17 |
| | JOURNAL OF ELECTRONIC ENGINEERING, Februar 1978 <br> Tokyo <br> M. WADA "Outlook for electrochromic displays" <br> Seiten 27 bis 29 <br> * Fig. 7 * <br> -- | 1 | |
| | | | **RECHERCHIERTE SACHGEBIETE (Int Cl.³)** |
| A | DE – A1 – 2 756 551 (ROCKWELL INTER-NATIONAL CORP.) <br> * Seite 21 unten * <br> -- | 1 | G 02 F 1/17 <br> G 09 F 9/00 |
| A | DE – A1 – 2 717 590 (ICI UNITED STATES INC.) <br> * Fig. 4 * <br> -- | 1 | |
| A | DE – A1 – 2 655 209 (IMPERIAL CHEMI-CAL INDUSTRIES LTD.) <br> * Fig. 1 bis 6 * <br> -- | | **KATEGORIE DER GENANNTEN DOKUMENTE** |
| A | US – A – 3 995 943 (R.J. JASINSKI) <br> * Spalte 2 unten * <br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: In der Anmeldung angeführtes Dokument <br> L: aus andern Gründen angeführtes Dokument |
| Der vorliegende Recherchenbericht wurde für alle Patentansprüche erstellt. | | | &: Mitglied der gleichen Patentfamilie, übereinstimmendes Dokument |

| Recherchenort | Abschlußdatum der Recherche | Prüfer |
|---|---|---|
| Berlin | 09-11-1979 | FUCHS |

EPA form 1503.1 06.78